# EUROPEAN PATENT APPLICATION

(11) **EP 2 415 513 A2**
(43) Date of publication of application: **08.02.2012**
(21) Application number: 11176245.6
(22) Date of filing: 02.08.2011
(51) Int. Cl.: B01D 53/08, C01B 31/08, B01J 20/34

(54) **Apparatus and method for the regeneration of the activated carbon inside an industrial plant**

(30) Priority: 03.08.2010 IT MI20101470
(71) Applicant: Ecospray Technologies S.r.l., 27058 Voghera (IT)
(72) Inventor: Archetti, Maurizio, 6653 Verscio (CH)
(74) Representative: Lualdi, Lorenzo

(57) **Abstract**

The present invention relates to an apparatus and a method for the regeneration of the granular activated carbon, preferably with grain sizes of between 1 mm and 10 mm, contained in the activated carbon filters used inside an industrial plant. The method and the apparatus that allows its implementation allow the continuous regeneration of the activated carbon contained in the moving-bed or fixed-bed filters of an industrial plant without requiring a plant shutdown, without having to disassemble the filters, and without having to replace the exhausted activated carbon with new activated carbon except after a large number of regenerations of the entire carbon, thus allowing considerable efficiency of operations and an extremely low environmental impact.

## Description

The present invention relates to a method and an apparatus for the regeneration of the activated carbon inside an industrial plant.

As it is known, activated carbon has the important property of adsorption and thus of the removal of a wide range of pollutants, such as VOCs (volatile organic compounds), solvents, and any other air pollutant. Activated carbon is often the only reliable method for the removal of organic and neutral pollutants. Unfortunately, one drawback of the use of activated carbon as a filtering agent is the premature exhaustion of its adsorbent properties, a drawback that considerably limits its widespread use in the depollution industry due to the resulting high costs of operating and maintenance costs owing to the need to replace the filter beds frequently.

In addition, a further disadvantage that makes it not convenient to use activated carbon as a filter medium in large industrial plants is the fact that handling the polluted carbon extracted from the filter beds that is to be regenerated requires the use of high safety measures for staff, which complicates the operations of washing and regenerating the activated carbon, thus making them slower and more costly. In industrial plants where activated carbon is used as a filter material, the plant itself must be shut down periodically (usually several times a year, depending on the hours of continuous operation of the plant) to allow the removal and replacement of the filter beds, which are removed from the plant in which they were fitted when new, and taken to the companies that supply the carbon to conduct its regeneration.

Periodically, therefore, the activated carbon filter beds of the plant must be replaced, which involves a significant cost to the company, both in terms of the cost of the activated carbon itself, and the costs related to the removal and replacement of the filter beds and the possible plant shutdown.

In addition, as mentioned, the company pays the cost of the new activated carbon to replace the exhausted carbon, but the companies that supply the carbon, which actually perform the regeneration, and therefore the new filter beds that are installed to replace those that are exhausted, always contain at least one part of regenerated carbon.

These drawbacks relating to the costs of operating and replacing the filters in fact make it so inconvenient to use activated carbon in large-scale plants that such plants use other filtering techniques. Some of these techniques include, for example, chemical scrubbers and biofilters.

Chemical scrubbers have the advantage of requiring little maintenance and preserving constant performance over time; however, they have the disadvantage of using chemical reagents, giving rise to a continuous discharge of liquids that must be disposed of. In addition, these filtering systems have low performance for certain substances, such as styrene, which is frequently used, for example, in fibreglass.

Biofilters, on the other hand, have the advantage of not using chemical reagents, and therefore do not have discharges; nevertheless, they work effectively with a low pollution load, and their performance is often rather low, since it is affected by weather conditions and atmospheric humidity, besides being a very cumbersome technology.

The principal task of the present invention is therefore to provide a method that permits the regeneration of the activated carbon filter beds of an industrial plant that makes it possible to eliminate or reduce the drawbacks that affect the regeneration methods known in the prior art.

In the context of this task, the purpose of the present invention is therefore to provide a method for the regeneration of the activated carbon filter beds of an industrial plant that eliminates the need to remove the filter bed and to replace it with a new one, and also that allows for the regeneration of the activated carbon while the plant is still in operation, whereby the regeneration takes place continuously.

A further purpose of the present invention is to provide an apparatus capable of implementing the same method of regeneration that is the object of the present invention, said apparatus being able to be inserted easily into any industrial plant. This task and these and other purposes that will become more clear hereinbelow are achieved by a method for the regeneration of the activated carbon filter beds of a plant characterised in that it comprises a step of extracting the activated carbon from the lower part of a moving-bed or fixed-bed activated carbon filter, a step of regenerating the carbon extracted from said filter, and a step of re-inserting the regenerated activated carbon at the top of said filter.

The method according to the present invention is also characterised by the fact that it occurs continuously.

Moreover, these tasks and purposes are achieved by an apparatus for the regeneration of the activated carbon of the filter beds of an industrial plant characterised in that it comprises means for the extraction of one part of the activated carbon from the lower part of the activated carbon filter of said plant, means for the regeneration of the activated carbon extracted from said filter, and means for the re-insertion of the regenerated activated carbon at the top of said filter.

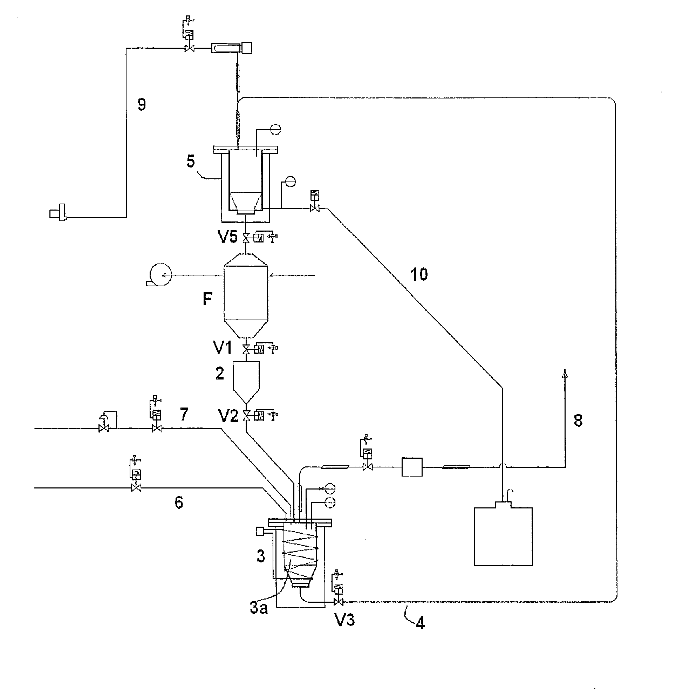

Further characteristics as well as further advantages of the present invention will become more clear from the following detailed description, which is provided by way of a non-limiting example, and is illustrated in the attached figure 1, which shows a diagram of the apparatus for the regeneration of the activated carbon of the filter beds of an industrial plant according to the present invention.

According to a preferred embodiment of the present invention illustrated in the figure mentioned by way of a non-limiting example, said apparatus comprises means for the extraction of the activated carbon from the lower part of the activated carbon filter of said plant, means for the regeneration of the activated carbon extracted from said filter, and means for the re-insertion of the regenerated activated carbon at the top of said filter.

The apparatus according to the present invention is also characterised in that it can operate continuously.

With reference to the diagram in figure 1, the letter **F** indicates the activated carbon filter of an industrial plant. Below said filter **F**, the apparatus according to the present invention provides means for the extraction of the activated carbon from the lower part of the filter, comprising at least one accumulation receptacle, indicated by the reference number **2**, and a first shut-off valve **v1** positioned on a line that branches from the lower part of said filter **F**, so that the activated carbon to be regenerated is made to fall by gravity from said filter **F**. For this purpose, said filter **F** provides a shut-off valve **v1**, so that a predefined amount of activated carbon is dropped from the filter **F** into the accumulation receptacle **2** at the opening controlled by the valve **v1**.

From the accumulation receptacle **2** via a second shut-off valve **v2**, the amount of activated carbon to be regenerated falls, again by gravity, into the means of regenerating the activated carbon. Said means of regeneration of the activated carbon comprise a containment receptacle for the regeneration, indicated by the reference number **3**, which comprises means for heating the activated carbon, for example composed of an electrical resistor **3a** that surrounds said regeneration receptacle **3** externally.

After the regeneration receptacle **3** has been filled, it is heated to the desired temperature and placed under a vacuum by compressed air ejectors of the line **7** and/or by a vacuum pump **8**. The vacuum ejector or the vacuum pump suck the desorbed concentrate from the oven and send it to a specific treatment. The regeneration means according to the present invention include the use of the vacuum in the receptacle **3** in order to optimise the desorption and eliminate or greatly reduce the presence of oxygen, so as to prevent/reduce/control the combustion of the activated carbon due to the effect of the high temperatures reached with the heating of the receptacle.

The desorbed substances, as mentioned, pass through the vacuum ejectors (or the vacuum pump) of the line **8** and are treated appropriately (by a torch, catalyst or scrubber) and are then re-released upstream of the activated carbon filter or evacuated into the atmosphere.

At the end of the regeneration cycle, the carbon is cooled by water jets coming from the network through a line **6**, the regeneration receptacle **3** is flooded and finally pressurised with compressed air through the line **7**. Finally, the shut-off valve **v3** is opened and, thanks to the pressure of the compressed air, the activated carbon and the water are pushed into the tank **5**.

In particular, said means for the re-insertion of the activated carbon in the upper part of the filter **F** comprise a line **4** suitable for transporting the activated carbon in a flow of water to an upper accumulation receptacle **5**. Said upper accumulation receptacle **5** is equipped with an appropriately shaped filtering base and, in said receptacle **5**, the carbon is drained of excess water and then dried by means of hot air coming from the drying air line **9**. In this process, any powders created are also washed out of the carbon.

It is therefore said that the regenerated activated carbon is transported from the regeneration receptacle **3**, which is located at a lower geodesic height, to the upper accumulation receptacle **5**, which is located at a higher geodesic height, above even the filter **F**, by means of a hydraulic transport, in which the granular activated carbon is transported through the line **4**, by means of a flow of water coming from the network placed under pressure inside the compressed-air receptacle **3**. This type of transport allows the movement of the activated carbon at low speed, thus reducing or preventing the partial atomisation of the carbon granules. Moreover, thanks to being transported in water, the activated carbon is washed so as to remove any powdery fraction. The water can also be reused several times, since it can be recovered through the recovery line **10** which branches from the upper accumulation receptacle 5 into an appropriate water recovery receptacle **11**, or it can be decided not to recover it and to discharge it directly into the sewer.

From the upper accumulation recipient **5**, the regenerated and dried activated carbon is re-inserted the into the upper part of the filter **F** by opening the shut-off valve **v5** positioned below said upper accumulation receptacle 5 and above said filter **F**.

The apparatus according to the present invention is therefore capable of performing the regeneration cycle of the activated carbon continuously. While the plant is in operation, a predetermined percentage of the volume, or of the weight, of the activated carbon present in the filter **F** is made to fall by gravity into the accumulation receptacle **2** through the controlled opening of the first shut-off valve **v1**. The amount of activated carbon is then dropped into the regeneration receptacle **3** through the opening of the second shut-off valve **v2**, and is regenerated by raising the temperature of the receptacle and creating the vacuum through the vacuum line **8**. By means of the line coming from the network **6**, water is introduced into the receptacle **3** in order to lower the temperature of the activated carbon, and then the shut-off valve **v3** is opened and, thanks to a more consistent flow of water coming from the line **6**, the receptacle is flooded to cause the release of the activated carbon together with the flow of water through the third shut-off valve **v3**. The regenerated activated carbon transported in the flow of water moves along the line **4** until it is upstream of the filter **F**, in particular in an upper accumulation receptacle **5**, where the carbon is separated from the water that flows out through the recovery line **10** and is subsequently dried using a jet of hot air coming from the drying line **9**.

Once dried, the regenerated carbon is re-inserted into the filter **F** from above by opening the valve **v5**, while the other activated carbon to be regenerated can be drawn off from the bottom part of the filter by re-opening the first shut-off valve **v1**, and the regeneration cycle takes place again with the new amount of activated carbon to be regenerated.

It has thus been demonstrated how the method and the apparatus according to the present invention achieve the purpose and the proposed objects. In particular, it has been illustrated how the method for regenerating the activated carbon according to the present invention allows continuous regeneration, without the need to remove the filter or filters present in an industrial plant, and thus completely eliminating the drawbacks of plant shutdown, and the activated carbon filling the fixed-bed or moving-bed filter or filters. The activated carbon no longer needs to be replaced, and therefore no longer needs to be repurchased from the supplier companies, which usually regenerate the exhausted activated carbon multiple times after collecting it from companies.

The apparatus according to the present invention, capable of performing the method that forms the object of the present invention, allows the direct implementation, within the industrial plant, of the regeneration of the activated carbon continuously, without the need for plant shutdown, without requiring time-consuming and costly disassembly and reassembly operations on the filters, and eliminating the need to replace the activated carbon except after numerous regeneration cycles, which results in very high cost savings.

The method and the apparatus according to the present invention allow such a high reduction in the operating costs of the activated carbon filters so as to make filtration by means of activated carbon economically competitive and even advantageous compared to other filtration systems (chemical scrubbers and biofilters) that are currently in use in large and medium-sized plants.

Numerous modifications can be made by the person skilled in the art, without departing from the scope of protection of the present invention. The protection scope of the claims, therefore, should not be limited by the illustrations or by the preferred embodiments shown by way of example in the description, but rather the claims must comprise all of the characteristics of patentable novelty that can be deduced from the present invention, including all of the characteristics treated as equivalent by a person skilled in the art.

## Claims

1. A method for the regeneration of activated carbon of the activated carbon filter or filters (F) of an industrial plant, **characterized in that** it comprises a step of extracting at least a part of the activated carbon from the lower part of one or more of said filters (F) of the plant, a step of regenerating said at least a part of activated carbon extracted from said one or more filters, and a step of re-inserting said at least a part of regenerated activated carbon into the upper part of said one or more filters.

2. The method according to the preceding claim, **characterized in that** extraction of said at least a part of activated carbon from said filter (F) takes place by opening a first shut-off valve (v1) positioned under said filter (F) and through consequent falling by gravity of the activated carbon into a accumulation receptacle (2).

3. The method according to the preceding claim, **characterized in that** the step of regenerating said at least a part of activated carbon takes place by means of a regeneration receptacle (3), into which the activated carbon falls by gravity following opening of a second shut-off valve (v2) positioned under said accumulation receptacle (2), which is heated using heating means (3a) and in which a vacuum condition is created.

4. The method according to the preceding claim, **characterized in that** the regenerating step comprises a further step consisting of lowering the temperature of the activated carbon inside the regeneration receptacle (3) by means of one or more jets of water coming from the network (6).

5. The method according to the preceding claim, **characterized in that** the step of re-inserting said at least a part of regenerated activated carbon into the upper part of said filter (F) provides that said regeneration receptacle (3) is flooded by a volume of water in a manner such that, upon opening a third shut-off valve (v3) positioned under said regeneration receptacle (3), said activated carbon flows out of said receptacle (3), conveyed by the flow of water and is returned through a hydraulic line (4) to the upper part of said filter (F).

6. The method according to the preceding claim, **characterized in that** the flow of water and activated carbon reaches through the hydraulic line (4) an upper accumulation receptacle (5).

7. The method according to the preceding claim, **characterized in that** in said upper accumulation receptacle (5) the water is drained from the receptacle and the activated carbon filtered and retained in the upper receptacle (5) is subsequently dried by means of a jet of air and, once dried, by means of opening of a shut-off valve (v5) positioned under said upper accumulation receptacle (5) falls by gravity into the upper part of the filter (F).

8. Apparatus for the regeneration of activated carbon of the activated carbon filter or filters (F) of an industrial plant, **characterized in that** it comprises means (v1, 2, v2) for extracting at least a part of the activated carbon from the lower part of each of said filters (F) of the plant, means (3, 3a, 6, 7, 8) for regenerating said at least a part of activated carbon extracted from said filter, and means (v3, 4, 5, 9, 10, v5) for re-inserting said at least a part of regenerated activated carbon into the upper part of said filter.

9. The apparatus according to the preceding claim, **characterized in that** said means for extracting at least a part of the activated carbon from the lower part of each of said filters (F) of the plant comprise at least one accumulation receptacle (2) and a first shut-off valve (v1) positioned under said filter (F), so that the activated carbon to be regenerated is made to fall by gravity from said filter (F) opening the shut-off valve (v1).

10. The apparatus according to the preceding claim, **characterized in that** said means for extracting at least a part of the activated carbon from the lower part of each of said filters (F) of the plant also comprise, under said accumulation tank (2), a line on which a second shut-off valve (v2) is positioned, so that when the shut-off valve (v2) is opened, the quantity of activated carbon to be treated falls, again by gravity, into said means (3, 3a, 6, 7, 8) for regenerating the activated carbon.

11. The apparatus according to the preceding claim, **characterized in that** said means for regenerating the activated carbon comprise at least one containing receptacle (3) for regenerating said activated carbon provided with means (3a) for heating said activated carbon and also provided with means (8) suitable to produce a vacuum condition inside the receptacle (3).

12. The apparatus according to the preceding claim, **characterized in that** said means (v3, 4, 5, 9, 10) for re-inserting said regenerated activated carbon into the upper part of said filter (F) comprise at least a third shut-off valve (v3) positioned on a hydraulic line (4) which branches from the lower portion of said receptacle (3), so that when said valve (v3) is opened, the flow of water coming from the line (6) flows out through the hydraulic line (4), carrying with it the regenerated activated carbon.

13. The apparatus according to the preceding claim, **characterized in that** said means (v3, 4, 5, 9, 10) for re-inserting said regenerated activated carbon into the upper part of said filter (F) further comprise an upper accumulation receptacle (5), provided with an appropriately shaped filtering bottom into which said hydraulic line (4) flows.

14. The apparatus according to the preceding claim, **characterized in that** said upper accumulation receptacle (5) is provided with an appropriately shaped filtering bottom and is connected, through shut-off means, to a recovery line (10) for recovery of the water separated from the activated carbon by means of the filtering bottom of the receptacle (5), and **in that** said upper accumulation receptacle (5) is also connected to a drying line (9) adapted to convey air into the receptacle (5) to dry the activated carbon, said means (v3, 4, 5, 9, 10) for re-inserting said regenerated activated carbon into the upper part of said filter (F) further comprising a shut-off valve (v5) positioned under said upper accumulation tank (5), on the line that branches from under said tank (5) and connects to the upper part of said filter (F).
